# EUROPÄISCHE PATENTSCHRIFT

(11) **EP 2 919 917 B1**
(45) Veröffentlichungstag und Bekanntmachung des Hinweises auf die Patenterteilung: **08.05.2019**
(21) Anmeldenummer: 13783848.8
(22) Anmeldetag: 25.10.2013
(51) Int. Cl.: B05B 12/14, B05B 13/02, B05B 15/65

(54) **APPLIKATIONSROBOTER MIT ANSCHLUSSEINHEIT FÜR VERSCHIEDENE APPLIKATOREN**
APPLICATION ROBOT HAVING A CONNECTION UNIT FOR DIFFERENT APPLICATORS
ROBOT D'APPLICATION MUNI D'UNE UNITÉ DE RACCORDEMENT POUR DIFFÉRENTS APPLICATEURS

(30) Priorität: 16.11.2012 DE 102012022535
(43) Veröffentlichungstag der Anmeldung: 23.09.2015
(73) Patentinhaber: Eisenmann SE, 71032 Böblingen (DE)
(72) Erfinder: REICHLER, Jan, 78465 Konstanz (DE); MEIER, Ralph, 71111 Waldenbuch (DE); TOMASCHKO, Jannis, 71088 Holzgerlingen (DE)
(74) Vertreter: Ostertag & Partner Patentanwälte mbB
(86) Internationale Anmeldenummer: PCT/EP2013/003216
(87) Internationale Veröffentlichungsnummer: WO 2014/075762

(56) Entgegenhaltungen:
- EP-A1- 0 850 693
- EP-A1- 1 245 296
- EP-A2- 1 129 784
- WO-A1-97/24189

## Beschreibung

Die Erfindung betrifft eine Applikator-Anschlusseinheit für einen Applikationsroboter zum Beschichten von Gegenständen, welche Versorgungsleitungen für einen Applikator umfasst und an welcher ein Applikator derart befestigbar ist, dass Arbeitsleitungen des Applikators mit den Versorgungsleitungen der Applikator-Anschlusseinheit verbunden sind, wobei
a) die Applikator-Anschlusseinheit als Adaptereinheit derart ausgebildet ist, dass wenigstens ein Applikator einer ersten Betriebsart und ein Applikator einer zweiten Betriebsart lösbar und austauschbar an der Applikator-Anschlusseinheit befestigbar sind;
b) die Versorgungsleitungen eine erste Versorgungsgruppe mit Versorgungsleitungen für den Applikator der ersten Betriebsart und wenigstens eine zweite Versorgungsgruppe mit Versorgungsleitungen für den Applikator der zweiten Betriebsart umfasst;
c) die Applikator-Anschlusseinheit eine Verbindungseinrichtung umfasst, mittels welcher wahlweise Versorgungsleitungen der Applikator-Anschlusseinheit gesperrt oder funktionsmäßig mit Arbeitsleitungen eines Applikators verbunden werden können.

Außerdem betrifft die Erfindung einen Applikationsroboter zum Beschichten von Gegenständen mit einem Roboterarm und einer von dem Roboterarm getragenen Applikator-Anschlusseinheit für einen Applikator sowie eine Anlage zum Beschichten von Gegenständen mit einem Beschichtungsraum, in welchem wenigstens ein solcher Applikationsroboter angeordnet ist.

Derartige Applikationsroboter werden insbesondere in Lackieranlagen zum Lackieren von Fahrzeugkarosserien, aber auch zum sonstigen Beschichten auch anderer Gegenstände, eingesetzt. Beispielsweise können mit solchen Applikationsrobotern auch Klebstoffe, Reinigungsflüssigkeiten oder sonstige Reinigungsmedien oder Schutzbeschichtungen auf Gegenstände aufgetragen werden.

Solche Applikationsroboter sind meist mehrachsig, führen eine Applikationseinheit mit sich und können aufgrund ihrer Mehrachsigkeit der Kontur eines zu beschichtenden Gegenstandes genau folgen. Bei bekannten Applikationsrobotern umfasst eine Applikationseinheit eine Applikator-Anschlusseinheit und den eigentlichen Applikator.

Die Applikator-Anschlusseinheit weist dabei einen Anschlussflansch auf, an welchen ein Applikator angeschraubt ist, wobei dort die Arbeitsleitungen des Applikators mit den dazu funktional komplementären Versorgungsleitungen der Applikator-Anschlusseinheit verbunden sind. Bei den Versorgungsleitungen der Applikator-Anschlusseinheit und den Arbeitsleitungen des Applikators kann es sich um fluidführende Leitungen einerseits, beispielsweise für Lack oder Druckluft, oder auch z.B. um elektrische Leitungen andererseits handeln. Allgemein ausgedrückt können dem Applikator alle Arbeitsmedien, die zu seinem Betrieb benötigt werden, über die Versorgungsleitungen der Applikator-Anschlusseinheit zugeführt werden.

Bekannte Applikator-Anschlusseinheiten sind an einen bestimmten Applikator mit einer bestimmten Betriebsart angepasst und umfassen alle hierzu benötigen Versorgungsleitungen. Bei einem Defekt oder Ausfall eines Applikators kann dieser manuell durch einen Werker vom Anschlussflansch gelöst und gegen einen Applikator mit derselben Betriebsart ausgetauscht werden, zu dem die vorhandenen Versorgungsleitungen in der Applikator-Anschlusseinheit passen.

Es gibt jedoch verschiedenartige Applikatoren, die in unterschiedlichen Betriebsarten betrieben werden. Klassische Applikatoren mit unterschiedlichen Betriebsarten sind beim Lackieren von Gegenständen beispielsweise elektrostatisch arbeitende Hochrotationszerstäuber und pneumatisch betriebene Sprühpistolen. Als Sprühpistole können auch Applikatoren bezeichnet werden, welche zum Reinigen der Gegenstände oder von Komponenten des Beschichtungsraumes verwendet werden, indem hierüber Reinigungsmedien abgegeben werden.

Abhängig von den zu beschichtenden Gegenständen oder dem angestrebten Beschichtungsergebnis, wozu auch ein Reinigungsergebnis zählt, kann es vorkommen, dass im Laufe eines Beschichtungsprozesses mehrere Applikatoren mit verschiedenen Betriebsarten eingesetzt werden sollen oder müssen.

Grundsätzlich können die Versorgungsleitungen der Applikator-Anschlusseinheit nur für eine einzige Betriebsart eines Applikator ausgelegt sein. Für einen Applikator einer zweiten Betriebsart kann die Applikator-Anschlusseinheit dann als Trag- und Führungseinrichtung dienen, wenn diesem Applikator die notwendigen Arbeitsmedien von extern zugeführt werden können. Dies wird aus der Beschreibung weiter unten deutlich.

Wenn nun ein Wechsel von einem Applikator mit einer ersten Betriebsart auf einen Applikator mit einer zweiten Betriebsart erfolgen soll, müssen bekannte Applikationseinheiten hierzu als Baueinheit ausgetauscht werden. Gegebenenfalls sind noch weitere Maßnahmen am Applikationsroboter erforderlich, um dessen Leitungen, die zur Applikator-Anschlusseinheit führen, an eine anders arbeitende Applikationseinheit mit einem anders arbeitenden Applikator anzupassen.

Derartige Umbauten sind jedoch sehr aufwendig und zeitintensiv und führen dementsprechend zu unerwünschten Stillstandzeiten einer Beschichtungsanlage. Dem tragen Applikator-Anschlusseinheiten der eingangs genannten Art Rechnung, wie sie beispielsweise in der EP 1 245 296 A1, der EP 0 850 693 A1, der EP 1 129 784 A2 oder der WO 97/24189 A1 beschrieben sind.

Vorzugsweise kann der Austausch von dem Applikator der ersten Betriebsart gegen den Applikator der zweiten Betriebsart dadurch automatisiert erfolgen. Dies bedeutet, dass ein Applikatorwechsel durchgeführt werden kann, ohne dass ein Werker hierfür manuell eingreifen muss. Hierfür ist zumindest eine entsprechend automatisiert betreibbare Koppeleinrichtung erforderlich. Da dann die Applikator-Anschlusseinheit am Applikationsroboter verbleiben kann und lediglich der Applikator ausgetauscht werden kann, kann der Applikatorwechsel insgesamt schneller und mit weniger Aufwand durchgeführt werden, als es bei bekannten Applikationseinheiten möglich ist.

Es versteht sich, dass die Applikator-Anschlusseinheit der eingangs genannten Art auch mit entsprechenden Versorgungsquellen, seien es Fluidquellen oder Energiequellen, verbunden sein muss, wozu auch entsprechende Zuleitungen im Roboterarm und den übrigen Komponenten des Applikationsroboters vorhanden sein müssen. Durch eine solche Applikator-Anschlusseinheit wird jedoch die Möglichkeit eröffnet, den Wechsel zwischen zwei Applikatoren unterschiedlicher Betriebsarten schnell und effektiv durchführen zu können.

Es ist Aufgabe der Erfindung, eine Applikator-Anschlusseinheit, einen Applikationsroboter und eine Anlage der eingangs genannten Art zu schaffen, bei welchen eine sichere Verbindung eines Applikators mit der Applikator-Anschlusseinheit ohne großen Steueraufwand möglich ist.

Diese Aufgabe wird bei einer Applikator-Anschlusseinheit der eingangs genannten Art dadurch gelöst, dass
die Verbindungseinrichtung ein Adapterorgan mit Verbindungsleitungen umfasst, welches wenigstens zwei Verbindungsstellungen einnehmen kann und dabei in einer ersten Verbindungsstellung Verbindungsleitungen einer ersten Verbindungsgruppe mit den Versorgungsleitungen der ersten Versorgungsgruppe und in einer zweiten Verbindungsstellung Verbindungsleitungen einer zweiten Verbindungsgruppe mit den Versorgungsleitungen der zweiten Verbindungsgruppe verbindet und außerdem in einer Wechselstellung alle Versorgungsgruppen der Applikator-Anschlusseinheit verschließt.

Vorteilhaft ist das Adapterorgan als drehbar gelagerte Drehplatte ausgebildet, welche eine Anschluss-Ausgangsseite der Applikator-Anschlusseinheit definiert.

Was nochmals die Befestigung von verschiedenen Applikatoren an der Applikator-Anschlusseinheit betrifft, ist es günstig, wenn eine Koppeleinrichtung vorhanden ist, welche komplementär zu Befestigungsmitteln an den Applikatoren ausgebildet ist.

Dies kann zum Beispiel dadurch erzielt werden, dass die Koppeleinrichtung als Steck-/Drehteil eines Bajonettverschlusses ausgebildet ist. Der dazu komplementäre Teil des Bajonettverschlusses ist dann an den verschiedenen Applikatoren vorhanden, die mit der Applikator-Anschlusseinheit zusammenarbeiten sollen.

Die Befestigung des Applikators an der Applikator-Anschlusseinheit und die Verbindung der notwendigen Leitungen können vorteilhaft verknüpft werden, wenn das Adapterorgan die Koppeleinrichtung umfasst.

Im Hinblick auf den Applikationsroboter der eingangs genannten Art wird die oben angegebene Aufgabe mit denselben Vorteilen gelöst, indem die Applikator-Anschlusseinheit einige oder alle der oben erläuterten Merkmale aufweist.

Das oben Gesagte gilt sinngemäß entsprechend für die Anlage der eingangs genannten Art, wenn deren Applikationsroboter mit einer solchen Applikator-Anschlusseinheit ausgestattet sind.

Bei der Anlage ist es außerdem von Vorteil, wenn in dem Beschichtungsraum wenigstens eine Wechselstation angeordnet ist, durch welche wenigstens ein Applikator einer ersten Betriebsart und wenigstens ein Applikator einer zweiten Betriebsart vorhaltbar sind. So kann bei einem erforderlichen Wechsel automatisiert auf den benötigten Applikator zugegriffen werden, der sich in der Wechselstation befindet.

Es kann günstig sein, wenn die Wechselstation als Wechselschleuse ausgebildet ist und ein Schleusenelement umfasst, welches den Beschichtungsraum von einer außerhalb des Beschichtungsraumes angeordneten Arbeitszone trennt.

Insbesondere dann, wenn ein ausgetauschter Applikator gewartet oder durch einen anderen, vorzuhaltenden Applikator ersetzt werden soll, ist dies günstig, da die erforderliche Maßnahme durchgeführt werden kann, ohne dass ein Werker die meist belastete Atmosphäre des Behandlungsraumes betreten muss.

Ein Ausführungsbeispiel der Erfindung wird nachfolgend anhand der Zeichnungen näher erläutert. In diesen zeigen
- Figur 1: schematisch einen horizontalen Schnitt einer Lackierkabine, in welcher Lackierroboter angeordnet sind, die so eingerichtet sind, dass von den Lackierrobotern getragene Applikationseinheiten automatisiert ausgetauscht werden können;
- Figur 2: schematisch einen vertikalen Schnitt der Lackierkabine von Figur 1;
- Figur 3: schematisch einen Handabschnitt eines der Lackierroboter in teilweiser Durchsicht, welcher einen Applikator mit einer ersten Betriebsart in Form eines Hochrotationszerstäubers trägt;
- Figur 4: schematisch einen Handabschnitt des Lackierroboters in teilweiser Durchsicht, welcher einen Applikator mit einer zweiten Betriebsart in Form einer Sprühpistole trägt;
- Figur 5: einen Teilschnitt eines Handabschnitts des Lackierroboters, in dem eine Anschluss-Ausgangsseite einer als Adaptereinheit ausgebildeten Applikator-Anschlusseinheit sowie eine Anschluss-Eingangsseite einer Applikationseinheit zu erkennen ist;
- Figuren: 6A und 6B eine Draufsicht auf die ApplikatorAnschlusseinheit des Lackierroboters und ein Adapterorgan der Adaptereinheit;
- Figuren: 6C, 6D, 6E Draufsichten auf die Anschluss-Ausgangsseite der Applikator-Anschlusseinheit, wobei das Adapterorgan verschiedene Verbindungsstellungen einnimmt.

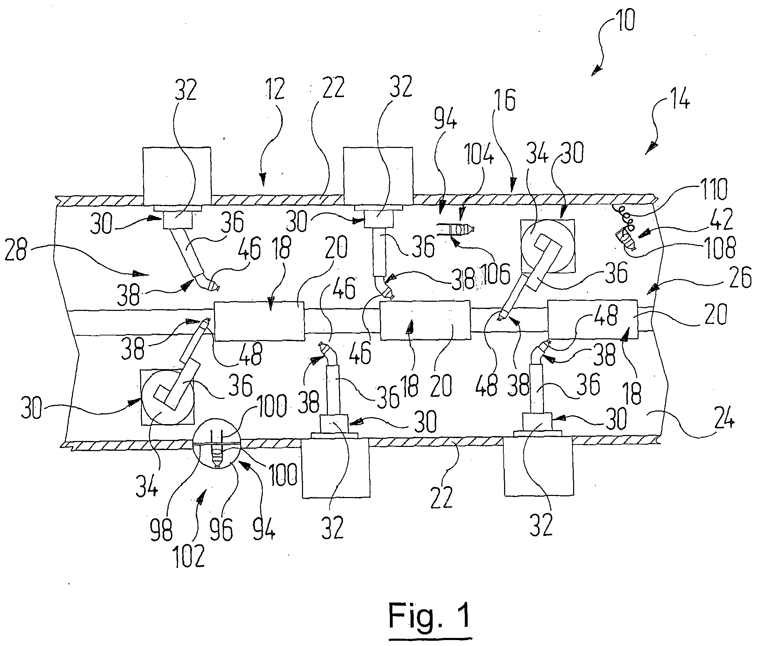

Zunächst wird auf Figur 1 Bezug genommen. In dieser bezeichnet 10 eine Beschichtungsanlage mit einem Beschichtungsraum 12, die beim vorliegenden Ausführungsbeispiel als Lackieranlage 14 mit einer Lackierkabine 16 ausgebildet ist. In dieser werden schematisch als Rechtecke dargestellte Gegenstände 18 mit einem Beschichtungmedium in Form eines Lacks versehen. Bei den Gegenständen 18 handelt es sich insbesondere um Fahrzeugkarosserien 20 oder um Karosserieteile.

Figur 1 zeigt einen horizontalen Schnitt eines Abschnitts der Lackierkabine 16 unterhalb einer Kabinendecke, die in diesem Schnitt nicht zu erkennen ist. Die Lackierkabine 16 umfasst zwei parallele seitliche Kabinenwände 22, die in dem nicht mehr dargestellten Bereich durch Stirnseiten verschlossen sind, wo in bekannter Weise Tore oder Schleusen für die Gegenstände 18 vorhanden sind. Der Boden der Lackierkabine 16 wird im Wesentlichen von einem Gitterrost 24 gebildet. Nach oben hin ist die Lackierkabine 16 in an und für sich bekannter Weise durch ein Luftplenum abgeschlossen, aus welchem konditionierte Luft in den Innenraum der Lackierkabine 16 geleitet werden kann.

Die zu lackierenden Gegenstände 18 werden mit Hilfe eines Fördersystems 26 in einer kontinuierlichen oder intermittierenden Bewegung durch den Innenraum der Lackierkabine 16 geführt, beispielsweise in Figur 1 von links nach rechts. Die Art des Fördersystems 26 ist im vorliegenden Zusammenhang ohne Belang. Die zu beschichtenden Gegenstände 18 werden in der Lackierkabine 16 mit Hilfe eines Applikationssystems 28 mit einer Beschichtung versehen.

Hierzu umfasst das Applikationssystem 28 beidseits des Bewegungsweges der Gegenstände 14 auf dem Fördersystem 26 einige Applikationsroboter 30. Beispielhaft dafür, dass Applikationsroboter unterschiedliche Bauweisen haben können, sind auf jeder Seite des Bewegungsweges der Gegenstände 18 jeweils zwei mehrachsige Gelenkarmroboter 32 und jeweils ein mehrachsiger Industrieroboter 34 gezeigt.

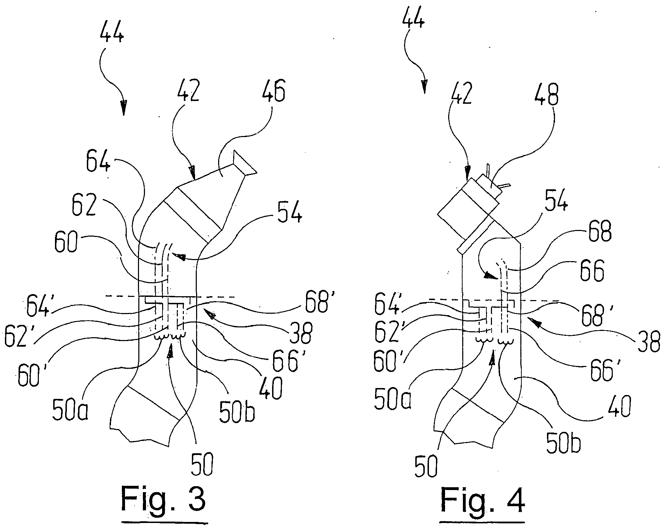

Die Applikationsroboter 30 haben jeweils einen beweglichen Roboterarm 36, an dessen freien Ende jeweils eine Applikationseinheit 38 getragen ist. Eine solche Applikationseinheit 38 umfasst eine Applikator-Anschlusseinheit 40 und einen damit gekoppelten Applikator 42, der somit am freien Ende des Roboterarmes 36 geführt ist. Dies ist in den Figuren 3 und 4 gut zu erkennen, die jeweils einen Handabschnitt 44 des Roboterarms 36 in größerem Maßstab zeigen. Die Applikator-Anschlusseinheit 40 wird nachfolgend kurz als Anschlusseinheit 40 bezeichnet.

Als Beispiele für Applikatoren 42 unterschiedlicher Betriebsart sind in Figur 3 ein elektrostatisch arbeitender Hochrotationszerstäuber 46 und in Figur 4 eine pneumatisch betriebene Sprühpistole 48 gezeigt, welche für die Applikation von Lacken eingesetzt werden. Derartige Hochrotationszerstäuber und Sprühpistolen sind an und für sich bekannt und müssen daher nicht eingehend beschrieben werden. Andere Arten von Applikatoren 42 sind zum Beispiel Applikatoren zum Auftragen von anderen Beschichtungen als Lacken, beispielsweise in Form einer Schutzschicht. Auch können Applikatoren 42 vorhanden sein, mit denen ein Reinigungsmedium abgegeben werden kann und welche zum Reinigen der Gegenstände 18 oder auch der Applikationsroboter 30 selbst verwendet werden.

Über die Anschlusseinheit 40 jedenfalls wird der jeweilige Applikator 42 mit allen Arbeitsmedien versorgt, die für dessen Betrieb benötigt werden. Hierzu zählen nicht nur fluide Medien wie Lacke oder Druckluft, sondern gegebenenfalls auch eine elektrische Energieversorgung.

Zu diesem Zweck verlaufen in der Anschlusseinheit 40 Versorgungsleitungen 50, die in einer Anschluss-Ausgangsseite 52 der Anschlusseinheit 40 enden. Dort ist der Applikator 42 mit der Anschlusseinheit 40 gekoppelt, wobei die Versorgungsleitungen 50 mit entsprechenden Arbeitsleitungen 54 verbunden sind, die durch den Applikator 42 verlaufen und über eine Anschluss-Eingangsseite 56 des Applikators 42 zugänglich sind.

Beim vorliegenden Ausführungsbeispiel verlaufen die Versorgungsleitungen 50 innerhalb der Anschlusseinheit 40. Es ist jedoch auch möglich, diese Versorgungsleitungen 50 als freiliegende und gegebenenfalls von außen zugängliche Leitungen auszubilden.

Die Applikationsroboter 30 sind nun derart eingerichtet, dass von den Applikationsrobotern 30 getragene Applikationseinheiten 42 automatisiert ausgetauscht werden können. Insbesondere kann ein Applikator 42 einer ersten Betriebsart, beispielsweise ein Hochrotationszerstäuber 46, gegen einen Applikator 42 einer zweiten Betriebsart, beispielsweise eine Sprühpistole 48, und umgekehrt ausgetauscht werden, ohne dass die Anschlusseinheit 40 hierzu ausgetauscht oder modifiziert werden muss.

Hierzu ist die Anschlusseinheit 40 als Adaptereinheit 58 ausgebildet, so dass verschiedene Applikatoren 42 mit unterschiedlichen Arbeitsleitungen 54 an der Anschluss-Ausgangsseite 52 ein und derselben Anschlusseinheit 40 mit den erforderlichen Versorgungsleitungen 50 in der Anschlusseinheit 40 verbunden werden können.

Für den Betrieb des Hochrotationszerstäubers 46 muss dieser beispielsweise wenigstens mit einem zu applizierenden Lack, mit Druckluft, die als Lenkluft zum Ausbilden einer bestimmten Strahlcharakteristik verwendet wird, sowie mit Hochspannung versorgt werden. Dementsprechend verlaufen in dem Hochrotationszerstäuber als Arbeitsleitungen 54 zumindest eine Lackleitung 60, eine Druckluftleitung 62 und eine Hochspannungsleitung 64. Die Sprühpistole 48 benötigt dagegen wenigstens einen zu applizierenden Lack und Druckluft, welche in diesem Fall als Zerstäuberluft dient. Daher besitzt die Sprühpistole 48 als Arbeitsleitungen 54 zumindest eine Lackleitung 66 und eine Druckluftleitung 68. Von allen Leitungen 60, 62, 64, 66 und 68 sind in den Figuren 3 und 4 nur stark schematische Abschnitte gezeigt.

Durch die Anschlusseinheit 40 für den Hochrotationszerstäuber 46 laufen nun mehrere Versorgungsleitungen 50, von denen jeweils mehrere eine Versorgungsgruppe 50a und eine Versorgungsgruppe 50b bilden. Jede Versorgungsgruppe 50a, 50b ist komplementär zu einer bestimmten Betriebsart eines Applikators 42. Beispielhaft sind vorliegend die erste Versorgungsgruppe 50a dem Hochrotationszerstäuber 46 und die zweite Versorgungsgruppe 50b der Sprühpistole 48 zugeordnet.

Zu den Versorgungsleitungen 50 der ersten Versorgungsgruppe 50a gehören eine Lackleitung 60', eine Druckluftleitung 62' und eine Hochspannungsleitung 64', während die Versorgungsleitungen 50 der zweiten Versorgungsgruppe 50b eine Lackleitung 66' und eine Druckluftleitung 68' umfassen. Die Bezugzeichen entsprechen zuzüglich eines Striches den Bezugzeichen der Lackleitungen 60 bzw. 66, der Druckluftleitungen 62 bzw. 68 und der Hochspannungsleitung 64 des Hochrotationszerstäubers 46 bzw. der Sprühpistole 48. Hierdurch ist veranschaulicht, welche Leitung in der Anschlusseinheit 40 im Betrieb mit welcher Leitung des Hochrotationszerstäubers 46 bzw. der Sprühpistole 48 verbunden sein muss.

Die Versorgungsleitungen 50 der Versorgungsgruppen 50a, 50b in der Anschlusseinheit 40 werden an einer von der Anschluss-Ausgangseite 52 abliegenden Stelle aus einer jeweiligen Lackquelle, einer Druckluftquelle und einer Hochspannungsquelle gespeist, wie es an und für sich bekannt ist und was daher nicht eigens gezeigt ist.

Wie oben angesprochen wurde, ist die Anschlusseinheit 40 Teil einer Adaptereinheit 58, so dass verschiedene Applikatoren 42 mit unterschiedlichen Betriebsarten mit ein und demselben Anschlusseinheit 40 gekoppelt und ohne umfangreichere Umbaumaßnahmen an ein und demselben Applikationsroboter 30 betrieben werden können.

Hierzu umfasst die Adaptereinheit 58 eine Koppeleinrichtung 70, mit deren Hilfe ein Applikator 42 automatisiert lösbar an der Anschlusseinheit 40 befestigt werden kann. Außerdem umfasst die Adaptereinheit 58 eine Verbindungseinrichtung 72, mittels welcher wahlweise Versorgungsleitungen 50 der Anschlusseinheit 40 gesperrt oder funktionsmäßig mit einem Applikator 42 verbunden werden können. Mit der Verbindungseinrichtung 72 können diejenigen Versorgungsleitungen 50 in der Anschlusseinheit 40 mit den jeweils in einem bestimmten Applikator 42 vorhandenen Arbeitsleitungen 52 verbunden und nicht benötige Versorgungsleitungen 50 gesperrt werden.

Beim vorliegenden Ausführungsbeispiel sind die erläuterten Funktionalitäten der Koppeleinrichtung 70 und der Verbindungseinrichtung 72 in einem einzigen Adapterorgan 74 vereint. Dieses Adapterorgan 74 ist dabei konkret als Drehplatte 76 ausgebildet, die am freien Ende der Anschlusseinheit 40 angeordnet ist und die Anschluss-Ausgangsseite 52 der Anschlusseinheit 40 bzw. des Roboterarms 36 definiert.

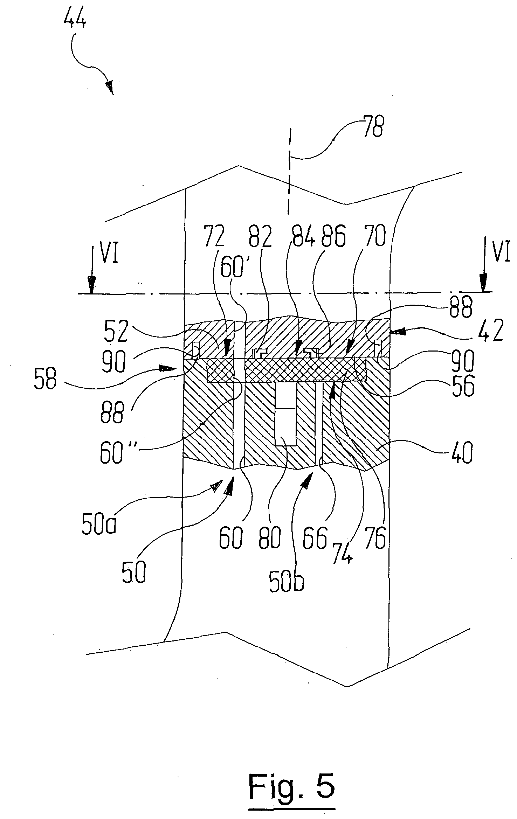

Die Drehplatte 76 ist drehbar gelagert und kann mittels eines Motors 80, der im Anschlussköper 40 untergebracht ist, um eine Drehachse 78 verdreht werden, die nur in Figur 5 angedeutet ist. Die Drehachse 78 verläuft im vorliegenden Fall koaxial zur Längsachse der Anschlusseinheit 40.

Bei einer nicht eigens gezeigten Abwandlung kann die Bewegung der Koppeleinrichtung 70 und/oder der Verbindungseinrichtung 72 auch durch separate Antriebe oder durch Bewegungsabläufe des Roboterarms 36 erfolgen.

Die Koppeleinrichtung 70 ist komplementär zu Befestigungsmitteln an den Applikatoren 42 ausgebildet, so dass die unterschiedlichen Applikatoren 46 und 48 an der Anschlusseinheit 40 befestigt werden können. Beim vorliegenden Ausführungsbeispiel ist die Koppeleinrichtung 70 der Anschlusseinheit 40 als Steck-/Drehteil 82 eines Bajonettverschlusses 84 ausgebildet, dessen komplementärer Halteteil 86 an den jeweiligen Applikatoren 42 vorhanden ist.

Der Steck-/Drehteil 82 ist an der zum Applikator 42 weisenden Außenfläche der Drehplatte 76 vorhanden. Außerdem umfasst die Koppeleinrichtung 70 zwei Fixierstifte 88, die radial neben der Drehplatte 76 von der Anschlusseinheit 40 abragen und in dazu komplementäre Sacklöcher 90 an der Anschluss-Eingangsseite 56 der Applikatoren 42 eintauchen können.

Um den Roboterarm 36 mit einem Applikator 42 zu koppeln, wird die Anschluss-Ausgangsseite 52 des Roboterarms 36 koaxial auf die Anschluss-Eingangsseite 56 des Applikators 42 zu bewegt und so ausgerichtet, dass die Fixierstifte 88 der Anschlusseinheit 40 in die Sacklöcher 90 und das Steck-/Drehteil 82 des Bajonettverschlusses 84 in dessen Halteteil 86 am Applikator 42 eintauchen. Nun wird die Drehplatte 76 motorisch verdreht, wobei die Position des Applikators 42 gegenüber dem Roboterarm 36 durch die Fixierstifte 88 fixiert bleibt. Bei der Drehung der Drehplatte 76 wird der Bajonettverschluss 84 verriegelt und der Applikator 42 ist an dem Roboterarm 36 arretiert.

Gleichzeitig werden bei der Drehung der Drehplatte 76 die jeweiligen Versorgungsgruppen 50a, 50b in der Anschlusseinheit 40 mit den jeweiligen Arbeitsleitungen 54 des ausgewählten Applikators 42 verbunden.

Hierzu umfasst die Drehplatte 76 mehrere Verbindungsleitungen 92, die beim vorliegenden Ausführungsbeispiel in zwei Verbindungsgruppen 92a, 92b angeordnet sind. Die erste Verbindungsgruppe 92a umfasst eine Lackleitung 60'', eine Druckluftleitung 62'' und eine Hochspannungsleitung 64''. Die zweite Verbindungsgruppe 92b umfasst eine Lackleitung 66" und eine Druckluftleitung 68".

Die Bezugzeichen entsprechen zuzüglich eines bzw. zweier Striche den Bezugzeichen der Lackleitungen 60, 60' bzw. 66, 66', der Druckluftleitungen 62, 62' bzw. 68. 68' und der Hochspannungsleitung 64, 64' des Hochrotationszerstäubers 46, der Sprühpistole 48 bzw. der Anschusseinheit 40. Hierdurch ist wieder veranschaulicht, welche Leitung in der Drehplatte 76 im Betrieb mit welcher Leitung der Anschlusseinheit 40 bzw. des Hochrotationszerstäubers 46 oder der Sprühpistole 48 verbunden werden soll.

Folglich sind die Leitungen 60'', 62'' und 64'' der erste Verbindungsgruppe 92a der Drehplatte 76 in ihrer Ausbildung und Anordnung komplementär zu den Lackleitungen 60, 60', den Druckluftleitungen 62, 62' und den Hochspannungsleitungen 64, 64' des Hochrotationszerstäubers 46 bzw. der Anschlusseinheit 40. Die Leitungen 66" und 68'' der zweiten Verbindungsgruppe 92b der Drehplatte 76 sind dementsprechend in ihrer Ausbildung und Anordnung komplementär zu den Lackleitungen 66, 64' und den Druckluftleitungen 68, 68' der Sprühpistole 48 bzw. der Anschlusseinheit 40.

Dabei sind die Verbindungsgruppen 92a, 92b jedoch so positioniert, dass in einer ersten Verbindungsstellung die Verbindungsleitungen 92 der ersten Verbindungsgruppe 92a mit den Versorgungsleitungen 50 der ersten Versorgungsgruppe 50a in der Anschlusseinheit 40 verbunden sind, während die Versorgungsleitungen 50 der zweiten Versorgungsgruppe 50b in der Anschlusseinheit 40 durch die Drehplatte 76 dicht verschlossen sind.

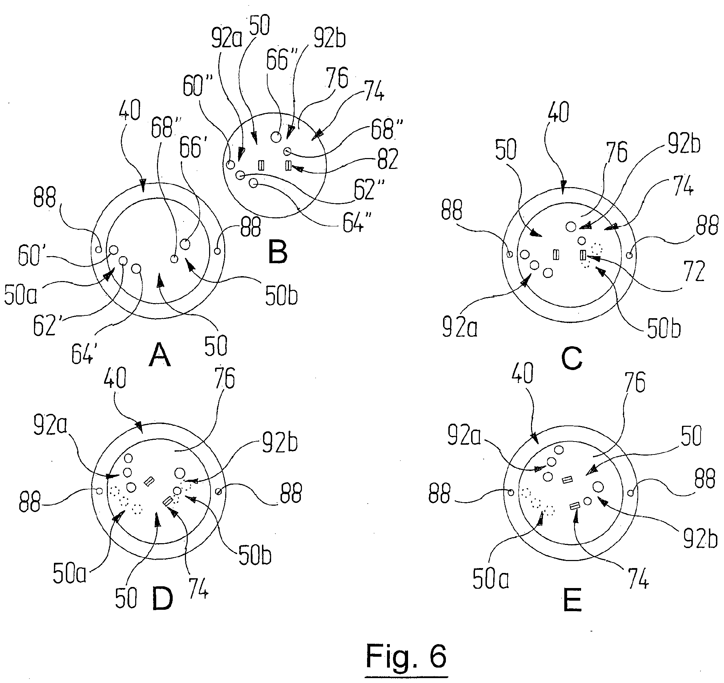

Dies ist anhand der Figuren 6A bis 6E ersichtlich. Die Figuren 6A und 6B zeigen die Anschlusseinheit 40 und die Drehplatte 76 nochmals in einer separaten Draufsicht. Die Versorgungsgruppen 50a und 50b und die Fixierstifte 88 der Anschlusseinheit 40 sowie die Verbindungsgruppen 92a, 92b und der Steck-/Drehteil 82 der Drehplatte 76 sind zu erkennen. In den Figuren 6C bis 6E sind die einzelnen Leitungen der Übersichtlichkeit halber nicht mehr mit eigenen Bezugszeichen versehen, sondern nur als Versorgungsgruppe 50a, 50b oder Verbindungsgruppe 92a, 92b gekennzeichnet.

Die oben erläuterte erste Verbindungsstellung ist in Figur 6C veranschaulicht, in der die verschlossenen Leitungen der zweiten Versorgungsgruppe 50b für die Sprühpistole 48 in Durchsicht zu erkennen sind.

In einer zweiten Verbindungsstellung, die in Figur 6E gezeigt ist, sind die Leitungen der zweiten Verbindungsgruppe 92b der Drehplatte 76 mit den Leitungen der zweiten Versorgungsgruppe 50b in der Anschlusseinheit 40 verbunden und dessen erste Versorgungsgruppe 50a ist durch die Drehplatte 76 verschlossen. Durch entsprechende Dicht-, Gleit- oder Isoliermittel, die hier nicht eigens gezeigt sind, ist eine Abkopplung von den nicht benötigten Leitungen gewährleistet.

In einer in Figur 6D zu erkennenden Wechselstellung der Drehplatte 76 sind beide Versorgungsgruppen 50a, 50b der Anschlusseinheit 40 verschlossen. Die Versorgungsgruppen 50a, 50b der Anschlusseinheit 40 sind wieder in Durchsicht zu erkennen. In dieser Wechselstellung der Drehplatte 76 kann deren Steck-/Drehteil 82 jeweils in das jeweilige Halteteil 86 an den Applikatoren 42 eintauchen bzw. aus diesem herausbewegt werden, wenn der Roboterarm 36 und der Applikator 42 so positioniert sind, dass die Fixierstifte 88 an der Anschlusseinheit 40 koaxial zu den Sacklöchern 90 des Applikators 42 ausgerichtet sind, wie es bei einem Wechsel der Applikatoren 42 notwendig ist.

Beim vorliegenden Ausführungsbeispiel sind dem Hochrotationszerstäuber 46 und der Sprühpistole 48 die unterschiedlichen Druckluftleitungen 62' bzw. 68' der Anschlusseinheit 40 zugeordnet. Wenn verschiedene Applikatoren 42 funktionell gleichartige Arbeitsleitungen 54 umfassen, können diese auch über ein und dieselbe Versorgungsleitung 50 der Anschlusseinheit 40 versorgt werden. Die Verbindungsgruppen 92a, 92b sind dann entsprechend angeordnet.

Bei einer ebenfalls nicht eigens gezeigten Abwandlung können auch mehr Versorgungsgruppen als die beiden Versorgungsgruppen 50a, 50b vorhanden sein, so dass die Anschlusseinheit 40 als Adaptereinheit 50 für mehr unterschiedliche Applikatoren 42 als Applikatoren 42 einer ersten und einer zweiten Betriebsart dienen kann. In diesem Fall kann das Adapterorgan 74 in Form der Drehplatte 76 mehr als zwei Verbindungsstellungen einnehmen, wobei in der Wechselstellung dann wieder alle Versorgungsleitungen 50 verschlossen sind.

Bei einer weiteren nicht gezeigten Abwandlung kann die Verbindungseinrichtung 72 zum Beispiel auch durch Ventile ausgebildet sein, die den jeweiligen Versorgungsleitungen 50 in der Anschlusseinheit 40 zugeordnet sind. Über eine dazu vorgesehene Steuerung können die Versorgungsleitungen 50 dann nach Bedarf individuell oder als Gruppe geöffnet oder verschlossen werden.

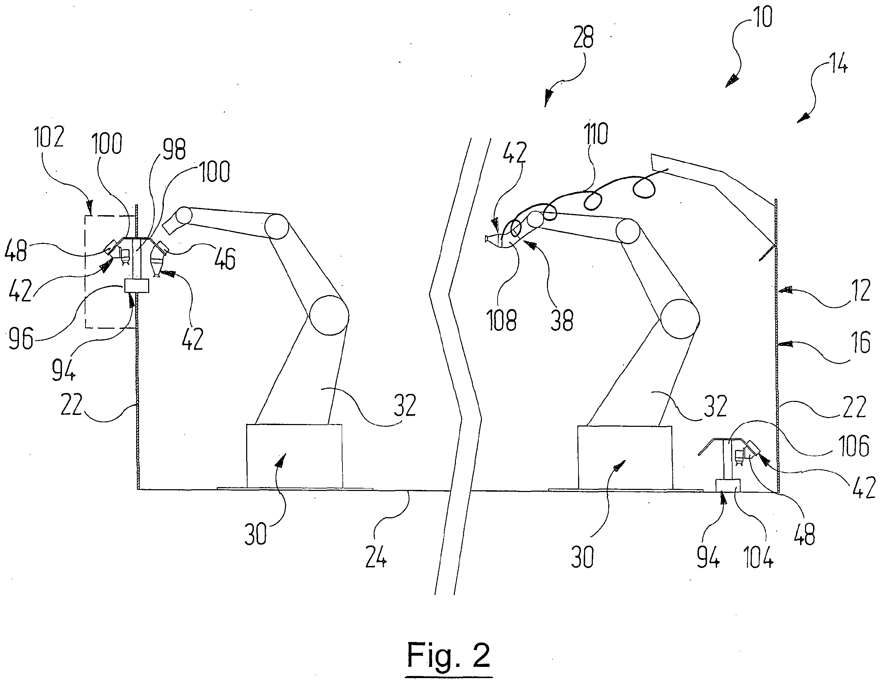

In der in den Figuren 1 und 2 gezeigten Lackierkabine 16 sind nun Wechselstationen 94 vorhanden, in welchen Applikatoren 42 unterschiedlicher Betriebsart vorgehalten werden können, was erneut in Form von Hochrotationszerstäubern 46 und Sprühpistolen 48 veranschaulicht ist. In Figur 1 sind beispielhaft zwei Wechselstationen 94 gezeigt; grundsätzlich kann im Bewegungsbereich und Arbeitsfenster jedes Applikationsroboters 30 eine Wechselstation 94 vorgesehen sein.

Eine erste Wechselstation 94 ist als Wechselschleuse in Form einer Drehstation 96 ausgebildet und in einer der Kabinenwände 22 der Lackierkabine 16 integriert. Die Drehstation 96 umfasst als Schleusenelement eine Drehwand 98, an deren gegenüberliegenden Seiten jeweils ein Applikatorhalter 100 angeordnet ist, welche jeweils einen Applikator 42 aufnehmen können. Bei der Drehstation 96 ragt einer der Applikatorhalter 100 in den Innenraum der Lackierkabine 16 hinein, wogegen der andere Applikatorhalter 100 sich außerhalb der Lackierkabine 16 in einer Arbeitszone 102 befindet.

Dort kann der Applikatorhalter 100 mit einem bestimmten Applikator 42, beispielsweise mit einem Hochrotationszerstäuber 46 oder einer Sprühpistole 48, bestückt werden, der dann nach Drehung der Drehwand 98 im Innenraum der Lackierkabine 16 zur Verfügung gestellt werden kann, ohne dass ein Werker den Kabineninnenraum betreten muss.

Eine zweite Wechselstation 94 ist als stationäre Wechselstation 104 im Innenraum der Lackierkabine 16 angeordnet und umfasst einen Applikatorhalter 106, welcher vorliegend zwei Aufnahmeplätze für Applikatoren 42 zur Verfügung stellt. Der Applikatorhalter 106 kann bei einer Abwandlung auch mehrere Applikatoren 42 aufnehmen und zum Beispiel karussellartig ausgebildet sein.

Die oben erläuterte Adaptereinheit 58 kann auch als reine Wechseleinheit für Applikatoren 42 dienen, für die keine Versorgungsleitung in der Anschlusseinheit 40 bzw. im Roboterarm 36 vorhanden ist. In diesem Fall dient die Anschlusseinheit 40 lediglich als Träg- und Führungseinheit für den Applikator 42.

Ein solcher Applikator 42 ist dann bezogen auf den Bajonettverschluss 84 komplementär zur Anschlusseinheit 40. Insbesondere müssen in diesem Fall die Positionen der Versorgungsgruppen 50a, 50b in der Anschlusseinheit 40 und der Verbindungsgruppen 92a, 92b in der Drehplatte 76 so angepasst sein, dass die Drehplatte 76 in eine Arretierstellung gedreht werden kann, in welcher zum einen ein Applikator 42 am Roboterarm 36 fixiert ist, die Versorgungsgruppen 50a, 50b in der Anschlusseinheit 40 jedoch dicht verschlossen sind.

Als Beispiel hierfür ist in den Figuren 1 und 2 ein Reinigungsapplikator 108 zu erkennen, welcher über eine Spiralleitung 110 mit den erforderlichen Arbeitsmedien versorgt wird. Beispielsweise kann als Reinigungsmedium Kohlendioxid CO₂ als CO₂-Schnee genutzt werden, wozu dem Reinigungsapplikator 108 sowohl CO₂ als auch Druckluft zugeführt werden muss. Hierzu ist die Spiralleitung 110 zweiadrig und umfasst eine CO₂-Ader und eine Druckluft-Ader. Als Reinigungsapplikator kommt beispielsweise auch eine Bürste oder dergleichen in Betracht, mit welcher ein Reinigungsfluid aufgetragen und auf einem zu reinigenden Gegenstand verteilt werden kann.

Als Reinigungsvorgang kommt beispielsweise in Betracht, dass ein erster Applikationsroboter 30 einen zweiten Applikationsroboter 30 von anhaftendem Lack-Overspray befreit. Aber auch die Gegenstände 14 können mit dem Reinigungsapplikator 108 gereinigt werden. Als Reinigungsmedium kann auch ein Lösungs- oder Reinigungsmittel mit dem Reinigungsapplikator 108 versprüht werden.

Als Beispiel für einen Applikatorwechsel wird angenommen, dass ein Hochrotationszerstäuber 46 am Roboterarm 36 automatisiert gegen eine Sprühpistole 48 ausgetauscht werden soll. Dazu führt der Roboterarm 36 den Hochrotationszerstäuber 46 zunächst zu einem freien Platz in einer Wechselstation 94. Dann wird die Drehplatte 76 motorisch in ihre Wechselstellung gedreht, wodurch alle Versorgungsleitungen 50 in der Anschlusseinheit 40 verschlossen bzw. vorhandene elektrische Kontakte getrennt werden und der Halteteil 86 des Bajonettverschlusses 84 am Hochrotationszerstäuber 46 den Steck-/Drehteil 82 an der Anschlusseinheit 40 freigibt. Daraufhin zieht der Roboterarm 36 die Anschlusseinheit 40 in einer Bewegung achsparallel zu den Fixierstiften 88 vom Hochrotationszerstäubter 46 ab. Der Roboterarm 36 führt die Anschlusseinheit 40 zu einer Sprühpistole 48 in einer Wechselstation 94 und bewegt diese aufeinander zu, bis die Teile 82 und 86 des Bajonettverschlusses 84 ineinander greifen. Eine Führung der Komponenten erfolgt wieder durch die Fixierstifte an der Anschlusseinheit 40 und die Sacklöcher 90 an der Sprühpistole 48. Die Drehplatte 76 wird motorisch in ihre zweite Verbindungsstellung gedreht, wodurch der Bajonettverschluss 84 verriegelt wird und die Versorgungsleitungen 50 für die Sprühpistole 48 mit deren Arbeitsleitungen 54 verbunden werden. Die Sprühpistole 48 ist nun einsatzbereit.

Die Applikatoren 42 können auch nicht von einem mehrachsigen Applikationsroboter 30 beweglich geführt sein, sondern stationär und ohne Freiheitsgrade an einer entsprechenden Tragstruktur gehalten sein, welche auch die Anschlusseinheit 40 lagert. In diesem Fall wird ein zu beschichtender Gegenstand mittels eines mehrachsigen Handhabungsroboters vor dem Applikator 42 bewegt.

Ein Wechsel eines derart gehaltenen Applikators 42 kann dann durch eine bewegliche Wechseleinheit erfolgen, die wiederum als mehrachsiger Handhabungsroboter ausgebildet sein kann, der mit einer Greifeinrichtung ausgestattet ist, welche die Applikatoren 42 greifen und von der Anschlusseinheit 40 abnehmen bzw. an diese übergeben kann.

Allgemein ausgedrückt erfolgt also bei beiden Wechselvarianten eine Relativbewegung zwischen dem auszutauschenden Applikator 42 und der Wechseleinrichtung.

Die Anschlusseinheit 40 kann außerdem eine Sensoreinrichtung umfassen, durch welche die Art des aufgenommenen Applikators 42 erfasst werden kann. Diese Sensoreinrichtung kann dann mit einer Applikationssteuerung zusammenarbeiten, so dass abhängig von der Art des verwendeten Applikators 42 verhindert werden, das nicht benötigte Versorgungsleitungen 50 mit einem Arbeitsmedium beaufschlagt werden.

## Patentansprüche

1. Applikator-Anschlusseinheit für einen Applikationsroboter zum Beschichten von Gegenständen (18), welche Versorgungsleitungen (50) für einen Applikator (42) umfasst und an welcher ein Applikator (42) derart befestigbar ist, dass Arbeitsleitungen (54) des Applikators (42) mit den Versorgungsleitungen (50) der Applikator-Anschlusseinheit (40) verbunden sind,
wobei
a) die Applikator-Anschlusseinheit (40) als Adaptereinheit (58) derart ausgebildet ist, dass wenigstens ein Applikator (46) einer ersten Betriebsart und ein Applikator (48) einer zweiten Betriebsart lösbar und austauschbar an der Applikator-Anschlusseinheit (40) befestigbar sind;
b) die Versorgungsleitungen (50) eine erste Versorgungsgruppe (50a) mit Versorgungsleitungen (50) für den Applikator (46) der ersten Betriebsart und wenigstens eine zweite Versorgungsgruppe (50b) mit Versorgungsleitungen (50) für den Applikator (48) der zweiten Betriebsart umfasst;
c) die Applikator-Anschlusseinheit (40) eine Verbindungseinrichtung (72) umfasst, mittels welcher wahlweise Versorgungsleitungen (50) der Applikator-Anschlusseinheit (40) gesperrt oder funktionsmäßig mit Arbeitsleitungen (54) eines Applikators (42) verbunden werden können,
**dadurch gekennzeichnet, dass**
d) die Verbindungseinrichtung (72) ein Adapterorgan (74) mit Verbindungsleitungen (92) umfasst, welches wenigstens zwei Verbindungsstellungen einnehmen kann und dabei in einer ersten Verbindungsstellung Verbindungsleitungen (92) einer ersten Verbindungsgruppe (92a) mit den Versorgungsleitungen (50) der ersten Versorgungsgruppe (50a) und in einer zweiten Verbindungsstellung Verbindungsleitungen (92) einer zweiten Verbindungsgruppe (92b) mit den Versorgungsleitungen (92) der zweiten Verbindungsgruppe (92b) verbindet und außerdem in einer Wechselstellung alle Versorgungsgruppen (50a, 50b) der Applikator-Anschlusseinheit (40) verschließt.

2. Applikator-Anschlusseinheit nach Anspruch 1, **dadurch gekennzeichnet, dass** das Adapterorgan (74) als drehbar gelagerte Drehplatte (76) ausgebildet ist, welche eine Anschluss-Ausgangsseite (52) der Applikator-Anschlusseinheit (40) definiert.

3. Applikator-Anschlusseinheit nach Anspruch 1 oder 2, **dadurch gekennzeichnet, dass** eine Koppeleinrichtung (70) vorhanden ist, welche komplementär zu Befestigungsmitteln an den Applikatoren (42) ausgebildet ist.

4. Applikator-Anschlusseinheit nach Anspruch 3, **dadurch gekennzeichnet, dass** die Koppeleinrichtung (70) als Steck-/Drehteil (82) eines Bajonettverschlusses (84) ausgebildet ist.

5. Applikator-Anschlusseinheit nach Anspruch 3 oder 4, **dadurch gekennzeichnet, dass** das Adapterorgan (74) die Koppeleinrichtung (70) umfasst.

6. Applikationsroboter zum Beschichten von Gegenständen mit einem Roboterarm (36) und einer von dem Roboterarm (36) getragenen Applikator-Anschlusseinheit (40) für einen Applikator (42),
**dadurch gekennzeichnet, dass**
die Applikator-Anschlusseinheit (40) nach einem der Ansprüche 1 bis 5 ausgebildet ist.

7. Anlage zum Beschichten von Gegenständen mit
einem Beschichtungsraum (12), in welchem wenigstens ein Applikationsroboter (30) angeordnet ist, der einen Roboterarm (36) und eine von dem Roboterarm (36) getragene Applikator-Anschlusseinheit (40) für einen Applikator (42) umfasst,
**dadurch gekennzeichnet, dass**
die Applikator-Anschlusseinheit (40) nach einem der Ansprüche 1 bis 5 ausgebildet ist.

8. Anlage nach Anspruch 7, **dadurch gekennzeichnet, dass** in dem Beschichtungsraum (12) wenigstens eine Wechselstation (94) angeordnet ist, durch welche wenigstens ein Applikator (46) einer ersten Betriebsart und wenigstens ein Applikator (48) einer zweiten Betriebsart vorhaltbar sind.

9. Anlage nach Anspruch 8, **dadurch gekennzeichnet, dass** die Wechselstation (94) als Wechselschleuse (96) ausgebildet ist und ein Schleusenelement (98) umfasst, welches den Beschichtungsraum (12) von einer außerhalb des Beschichtungsraumes (12) angeordneten Arbeitszone (102) trennt.

## Claims

1. An applicator connection unit for an application robot for coating objects (18), which comprises supply lines (50) for an applicator (42) and to which an applicator (42) can be fastened in such a way that working lines (54) of the applicator (42) are connected to the supply lines (50) of the applicator connection unit (40),
wherein
a) the applicator connection unit (40) is constructed as an adapter unit (58) in such a way that at least one applicator (46) of a first operating mode and one applicator (48) of a second operating mode can be releasably and replaceably fastened to the applicator connection unit (40);
b) the supply lines (50) comprises a first supply group (50a) having supply lines (50) for the applicator (46) of the first operating mode and at least one second supply group (50b) having supply lines (50) for the applicator (48) of the second operating mode;
c) the applicator connection unit (40) comprises a connecting device (72) by means of which supply lines (50) of the applicator connection unit (40) can be optionally blocked or functionally connected to working lines (54) of an applicator (42),
**characterized in that**
d) the connecting device (72) comprises an adapter member (74) with connecting lines (92) which can take over at least two connecting positions and thereby, in a first connecting position, connects connecting lines (92) of a first connecting group (92a) to the supply lines (50) of the first supply group (50a) and, in a second connecting position, connects connecting lines (92) of a second connecting group (92b) to the supply lines (92) of the second connecting group (92b) and moreover, in a changeover position, closes all supply groups (50a, 50b) of the applicator connection unit (40).

2. An applicator connection unit according to Claim 1, **characterized in that** the adapter member (74) is constructed as a rotatably mounted rotary plate (76) which defines a connection output side (52) of the applicator connection unit (40).

3. An applicator connection unit according to Claim 1 or 2, **characterized in that** a coupling device (70) is present, which is of a complementary construction to fastening means on the applicators (42).

4. An applicator connection unit according to Claim 3, **characterized in that** the coupling device (70) is constructed as a plug-in/turning part (82) of a bayonet closure (84).

5. An applicator connection unit according to Claim 3 or 4, **characterized in that** the adapter member (74) comprises the coupling device (70).

6. An application robot for coating objects having a robot arm (36) and an applicator connection unit (40) for an applicator (42), which applicator connection unit (40) is carried by the robot arm (36),
**characterized in that**
the applicator connection unit (40) is constructed according to one of Claims 1 to 5.

7. An installation for coating objects having
a coating chamber (12) in which at least one application robot (30) is arranged, which comprises a robot arm (36) and an applicator connection unit (40) for an applicator (42), which applicator connection unit is carried by the robot arm (36),
**characterized in that**
the applicator connection unit (40) is constructed according to one of Claims 1 to 5.

8. An installation according to Claim 7, **characterized in that**, arranged in the coating chamber (12), there is at least one changeover station (94) by means of which at least one applicator (46) of a first operating mode and at least one applicator (48) of a second operating mode are held available.

9. An installation according to Claim 8, **characterized in that** the changeover station (94) is constructed as a changeover lock (96) and comprises a lock element (98) which separates the coating chamber (12) from an operating zone (102) arranged outside the coating chamber (12).

## Revendications

1. Unité de raccordement d'applicateurs dévolue à un robot applicateur affecté au revêtement d'objets (18), munie de conduits d'alimentation (50) dédiés à un applicateur (42), et à laquelle un applicateur (42) peut être fixé de façon telle que des conduits de travail (54) dudit applicateur (42) soient reliés auxdits conduits d'alimentation (50) de ladite unité (40) de raccordement d'applicateurs,
sachant que
a) l'unité (40) de raccordement d'applicateurs est réalisée sous la forme d'une unité adaptatrice (58), de telle sorte qu'au moins un applicateur (46) d'un premier type de fonctionnement et un applicateur (48) d'un second type de fonctionnement puissent être fixés, de manière libérable et remplaçable, à ladite unité (40) de raccordement d'applicateurs ;
b) les conduits d'alimentation (50) incluent un premier groupe d'alimentation (50a), doté de conduits d'alimentation (50) dédiés à l'applicateur (46) du premier type de fonctionnement, et au moins un second groupe d'alimentation (50b) pourvu de conduits d'alimentation (50) dédiés à l'applicateur (48) du second type de fonctionnement ;
c) ladite unité (40) de raccordement d'applicateurs est équipée d'un dispositif de liaison (72) au moyen duquel des conduits d'alimentation (50) de ladite unité (40) de raccordement d'applicateurs peuvent, sélectivement, être isolés ou mis en liaison fonctionnelle avec des conduits de travail (54) d'un applicateur (42),
**caractérisée par le fait que**
d) le dispositif de liaison (72) comporte un organe adaptateur (74) qui est muni de conduits de jonction (92) ; qui peut prendre au moins deux positions de jonction en reliant alors, dans une première position de jonction, des conduits de jonction (92) d'un premier groupe de liaison (92a) aux conduits d'alimentation (50) du premier groupe d'alimentation (50a) et, dans une seconde position de jonction, des conduits de jonction (92) d'un second groupe de liaison (92b) aux conduits d'alimentation (92) dudit second groupe de liaison (92b) ; et qui par ailleurs, dans une position de remplacement, ferme tous les groupes d'alimentation (50a, 50b) de ladite unité (40) de raccordement d'applicateurs.

2. Unité de raccordement d'applicateurs, selon la revendication 1, **caractérisée par le fait que** l'organe adaptateur (74) est réalisé sous la forme d'une platine tournante (76), montée à rotation et définissant un côté (52) de raccordement de sortie de ladite unité (40) de raccordement d'applicateurs.

3. Unité de raccordement d'applicateurs, selon la revendication 1 ou 2, **caractérisée par** la présence d'un dispositif de couplage (70) dont la réalisation est complémentaire de celle de moyens de fixation, sur les applicateurs (42).

4. Unité de raccordement d'applicateurs, selon la revendication 3, **caractérisée par le fait que** le dispositif de couplage (70) est réalisé sous la forme d'une pièce tournante/emboîtable (82) d'une fermeture (84) de type baïonnette.

5. Unité de raccordement d'applicateurs, selon la revendication 3 ou 4, **caractérisée par le fait que** l'organe adaptateur (74) comprend le dispositif de couplage (70).

6. Robot applicateur affecté au revêtement d'objets, muni d'un bras (36) et d'une unité (40) de raccordement d'applicateurs, destinée à un applicateur (42) et portée par ledit bras (36) du robot,
**caractérisé par le fait que**
l'unité (40) de raccordement d'applicateurs est réalisée en conformité avec l'une des revendications 1 à 5.

7. Installation dévolue au revêtement d'objets, comprenant une chambre de revêtement (12) dans laquelle est logé au moins un robot applicateur (30) muni d'un bras (36) et d'une unité (40) de raccordement d'applicateurs, destinée à un applicateur (42) et portée par ledit bras (36) du robot,
**caractérisée par le fait que**
l'unité (40) de raccordement d'applicateurs est réalisée en conformité avec l'une des revendications 1 à 5.

8. Installation selon la revendication 7, **caractérisée par le fait que** la chambre de revêtement (12) renferme au moins un poste de remplacement (94) par l'intermédiaire duquel au moins un applicateur (46) d'un premier type de fonctionnement, et au moins un applicateur (48) d'un second type de fonctionnement, peuvent être tenus en réserve.

9. Installation selon la revendication 8, **caractérisée par le fait que** le poste de remplacement (94) est réalisé sous la forme d'un sas de remplacement (96), et inclut un élément de canalisation (98) qui sépare la chambre de revêtement (12) d'avec une zone de travail (102) située à l'extérieur de ladite chambre de revêtement (12).
